# FASCICULE DE BREVET EUROPEEN

(11) **EP 0 370 907 B1**
(45) Date de publication et mention de la délivrance du brevet: **18.01.1995**
(21) Numéro de dépôt: 89403231.7
(22) Date de dépôt: 22.11.1989
(51) Int. Cl.: H01R 13/115, H01R 13/17

(54) **Contact électrique sécable hors charge, notamment pour appareils ou véhicules raccordés**
Elektrischer Kontakt nicht unter Last trennbar, insbesondere für gekuppelte Apparate oder Fahrzeuge
Electrical contact broken without pressure, in particular for hitched apparatuses or vehicles

(30) Priorité: 25.11.1988 FR 8815453
(43) Date de publication de la demande: 30.05.1990
(73) Titulaire: SOCIETE ANONYME DITE: CARRIER KHEOPS BAC, F-72024 Le Mans (FR)
(72) Inventeur: Savin, Antoine, F-75014 Paris (FR); Salaun, Jacques, F-72000 Le Mans (FR)
(74) Mandataire: Jolly, Jean-Pierre

(56) Documents cités:
- EP-A- 0 249 406
- DE-U- 8 205 678
- GB-A- 1 024 938
- US-A- 3 170 752
- US-A- 3 976 347
- US-A- 4 082 411

## Description

La présente invention concerne un contact électrique comportant une première partie de contact électrique classique et une seconde partie attenante à la partie de contact et formant jonction mécanique réversible du contact électrique, ladite partie de jonction mécanique étant conformée de telle sorte qu'elle n'affecte pas la partie de contact électrique, et la jonction étant réalisable hors tension manuellement et sécable hors tension sous un effort de traction déterminé.

Ce contact permet en particulier une déconnexion automatique de sécurité des éléments de contact de liaison électrique entre des appareils ou véhicules raccordés, de manière que leur désaccouplement ou séparation puisse être effectuée sans détérioration de ce contact ni de ses accessoires de fixation.

Un tel contact trouve son intérêt notamment dans les ensembles train de véhicules ou véhicules et remorques qui doivent être désaccouplés rapidement en cas d'incident ou d'accident grave, tel que sinistre par le feu survenant à bord d'un des véhicules, afin d'empêcher toute propagation.

On connaît par US-A-3 976 347 un contact sécable destiné à la connexion des câbles dans les tuyaux de puits de pétroles. Le verrouillage est obtenu par des doigts externes sur des encoches de crochetage. La secabilité s'obtient par rupture d'une goupille de fixation de l'un des doigts. Un tel contact n'est pas adapté pour le raccordement électrique de véhicules raccordés nécessitant une déconnexion automatique, à un effort déterminé en cas d'incident.

De plus, les prises de raccordement ou contacts électriques classiques sont généralement verrouillés en fermeture de telle sorte qu'un désaccouplage des véhicules sans intervention d'ouverture du contact crée inévitablement un arrachement des câbles au niveau de la prise et du support de prise et quelque fois plus en amont nécessitant une remise en état complète de l'installation électrique.

L'invention vise à remédier à cet inconvénient en proposant un nouvel élément de contact électrique comportant les caractéristiques des revendications 1 et 7.

Naturellement, la partie mécanique de jonction est tarée pour une force de traction compatible à la section, la nature des câbles d'entrée-sortie et tenant compte des critères d'exploitation pour assurer un maintien correct du contact électrique résistant aux phases normales d'exploitation, et également aux conditions d'exploitation (chaleur, humidité, corrosion etc...).

Un tel contact permet ainsi de sectionner sans dommage et automatiquement la liaison électrique entre appareils ou véhicules raccordés et ceci sans intervention extérieure. Leur séparation rapide ne provoque pas la détérioration mécanique du contact et de ses accessoires de fixation, telle qu'elle est connue actuellement. En second lieu, la remise en fonction du contact lors du réaccouplement desdits appareils ou véhicules est effectuée aisément.

Il est entendu que la sécabilité doit se faire hors tension ou hors charge pour ne pas créer d'incidents électriques (arc, feu, etc).

Comme mentionné précédemment, la partie de contact électrique est classique s'adaptant à la totalité des types de contacts électriques à broches et alvéoles ou contact à pression, et convient aux faibles et fortes intensités de même qu'à toutes les tensions industrielles en courant continu ou en courants alternatifs. Elle comprend une partie fixe à contact à alvéole élastique ou lisse ou contact à pression raccordée à un câble ou élément conducteur électrique et une partie mobile coopérant en contact avec ladite partie fixe, cette partie étant constituée d'une broche cylindrique élastique ou lisse ou d'un élément de contact à pression raccordé à un câble ou élément conducteur assurant la continuité électrique.

La partie mécanique assurant la jonction est constituée de l'ensemble de deux pièces de type respectivement mâle et femelle coopérant l'une avec l autre en engagement mutuel par déformation élastique, l'une des pièces étant solidaire de la partie de contact fixe et l'autre de la partie de contact mobile.

Selon une première version l'élément mâle est un embout en acier indéformable de forme ogivale dont le diamètre maximal est inférieur à celui de l'alvéole. L'élément femelle est une noix extensible recevant élastiquement ledit embout et ne permettant son extraction que sous un effort de traction déterminé. De préférence l'embout est solidaire de la partie mobile de contact (en bout de broche) tandis que la noix extensible est goupillée sur l'alvéole à l'extrémité arrière de celui-ci.

Selon une seconde version, ces pièces consistent avantageusement en une bague solidaire de la partie fixe et en une noix complémentaire déformable, de diamètre inférieur à celui de l'alvéole, disposée en bout du contact mobile solidairement à ce dernier, la noix étant apte à être engagée dans la bague par l'arrière de la partie de contact fixe avec pose d'un élément d'assemblage après branchement manuel du contact mobile sur la partie fixe, et séparée par extraction élastique à la déconnexion sous une valeur de traction à tarage déterminé.

Ladite valeur de traction à tarage déterminé assure la capacité de déconnexion de sécurité sans dommage pour l'installation électrique propre aux appareils ou véhicules concernés.

Selon une troisième version la partie mécanique de jonction comporte des éléments d'engagement externes indépendants de la partie de contact électrique proprement dite.

Lesdits éléments d'engagement consistent avantageusement en au moins deux bras articulés, solidaires de la partie fixe du contact (côté socle) et disposés sur sa périphérie, par exemple, diamétralement opposés l'un à l'autre, ces bras étant munis de poussoirs à ressort aptes à s'engager élastiquement à la fermeture du contact sur un profil de retenue formé sur le corps de la partie mobile de contact (fiche sécable) lorsque ses bras sont verrouillés en services, rabattus en position le long du corps de la partie fixe de contact, les poussoirs étant tarés à une force déterminée pour permettre le dégagement de sécurité de ladite partie du contact sous un effort d'extraction donné.

Ledit profil de retenue est avantageusement de forme conique et les poussoirs sont à doigt télescopique tourné vers ledit profil.

Le verrouillage des bras articulés est réalisé par une bague montée rotative sur la partie de contact mobile ou fiche, cette bague étant munie d'encoches laissant passer la partie d'extrémité des bras lors de leur mise en position de verrouillage et les maintenant en position verrouillée par leur extrémité sous sa surface inférieure après rotation.

Grâce à cette dernière disposition, on obtient une bonne accesibilité et visibilité des éléments d'engagement de la jonction mécanique du contact et l'effort de sécabilité peut être adapté à un niveau élevé. L'enfichage demeure manuel, les bras étant basculés hors engagement, l'effort mis en jeu est celui de l'embrochage normal de la partie de contact électrique, broche cylindrique dans l'alvéole élastique. Dans le cas de l'extraction accidentelle (hors tension) du contact exercée par l'intermédiaire des câbles de liaison côté fiche, les deux poussoirs télescopiques sont repoussés et permettant le recul de la fiche de quelques millimètres. Les deux bras maintenus par leur extrémité sont alors libérés de l'emprise de la bague rotative relâchant toute contrainte de retenue mécanique pour une extraction subséquente automatique facile de la fiche.

L'invention est illustrée ci-après à l'aide d'exemples de réalisation et en référence aux dessins annexés sur lesquels:
La figure 1 est une vue en coupe longitudinale médiane d'un contact sécable selon l'invention, suivant la première version;
La figure 2 est une vue analogue à la figure 1 pour une variante de réalisation (seconde version) et
La figure 3 est une vue éclatée du contact de la figure 2.
La figure 4 est une vue analogue à la figure 1 d'une variante de réalisation (troisième version).

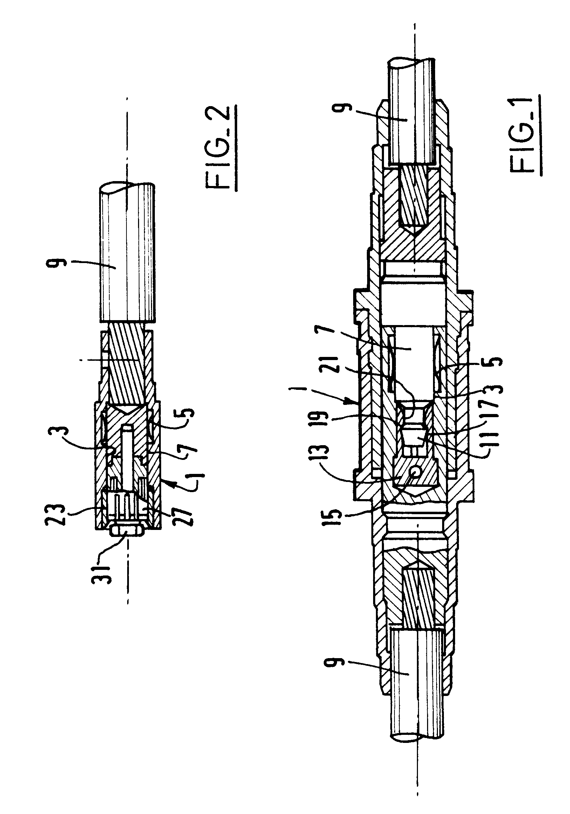

Le contact représenté à la figure 1 est conçu pour que la jonction de contact puisse être sectionnée à une valeur de traction de tarage relativement faible, comprise entre 100 et 150 daN, l'enfichage étant réalisé manuellement par engagement de pression à une valeur de poussée inférieure à 45 daN.

Il comprend une partie fixe 1 constituée d'un alvéole 3 avec ses lamelles de contact conductrices 5 et une partie mobile 7 de type broche cylindrique pénétrant dans ledit alvéole jusqu'en butée. Ces éléments de contact sont convenablement reliés aux câbles conducteurs 9 d'entrée et sortie du courant. La broche de contact mobile 7 comporte a son extrémité un nez 11 ou embout indéformable (en acier traité) à double développement conique avant et arrière s'engageant élastiquement dans une bague déformable ou noix extensible 13, également en acier solidaire par goupille 15 de la partie fixe de contact 1 en bout d'alvéole. L'angle de cône de la partie de nez 17 tournée vers l'avant est faible de façon à autoriser une pénétration manuelle aisée de l'embout 11 dans la bague réceptrice 13 qui se déforme élastiquement à l'introduction. L'angle de cône de la partie à l'arrière 19 du nez est plus important et constitue la partie conique de maintien proprement dit de la jonction, laquelle s'appuie sur les protubérances internes radiales 21 de la bague. Cette dernière est fendue, longitudinalement en périphérie , ce qui assure sa capacité de déformation élastique à l'introduction ou à l'extraction du nez, cette dernière phase correspondant au sectionnement de la jonction ou du contact. Le diamètre maximal du nez est inférieur à celui de l'alvéole de telle sorte qu'en aucun cas celui-ci n'est affecté par l'extraction du nez hors de l'alvéole.

Le mode de réalisation de la figure 2 est prévu pour des forces de traction en sectionnement de la jonction du contact se situant à une gamme de valeurs plus élevées, entre 250 et 300 daN.

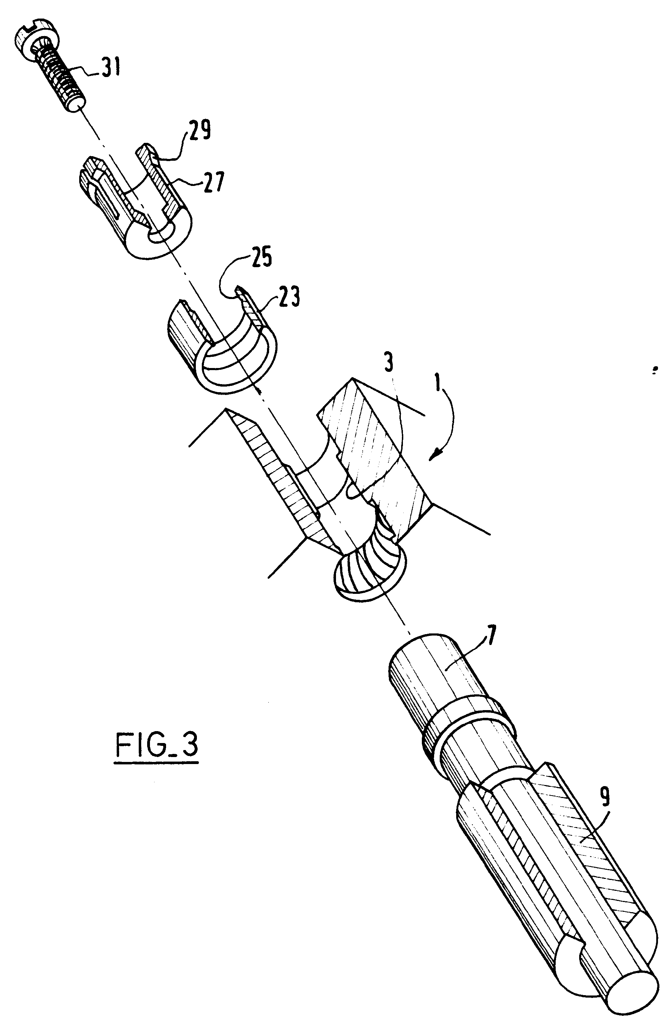

Cette variante représentée sur les figures 2 et 3 comporte des éléments analogues au contact de la figure 1 et désignés par les même références, à savoir la partie fixe 1 de contact à alvéole 3 et la partie mobile de contact à broche cylindrique 7 reçue par l'alvéole 3.

Le dispositif de retenue mécanique est assemblé en bout du contact mobile 7 après branchement de ce dernier dans l'alvéole du contact. Il est constitué par une bague cylindrique 23 en acier monté à l'extrémité arrière de l'alvéole de la partie fixe. Cette bague comporte une zone d'appui conique 25 au niveau de son ouverture d'entrée. Un manchon ou noix élastique 27 fendu longitudinalement en périphérie est reçu par cette bague et pénètre dans l'alvéole à l'arrière de celui-ci; cette noix comporte une portée conique 29 au niveau de son extrémité arrière, laquelle est complémentaire de la zone d'appui 25 de la bague. Le diamètre externe maximal de la portée conique de noix est inférieur à celui de l'alvéole.

Un taraudage interne est formé en bout de broche mobile 7; il permet de solidariser après branchement ladite broche mobile à la noix extensible 27 au moyen d'une vis 31 qui vient se serrer sur son extrémité arrière.

Ce faisant, on solidarise la partie mobile à la partie de contact fixe aux limites près de l'assemblage de la noix extensible sur la bague. Le tarage de la force d'extraction de la noix sur la bague est donc fonction de sa déformation élastique au passage de sa portée conique sur l'appui correspondant de la bague. Au cours de l'extraction, l'alvéole du contact n'est pas affecté par le passage de la noix extensible (de diamètre inférieur).

Après sectionnement de la jonction, le contact n'ayant subi aucune dégradation peut être remis en service très aisément. Il suffit de brancher la partie mobile dans la partie fixe de contact, d'introduire la noix dans la bague et enfin de serrer la vis 31 sur la noix solidairement à la partie mobile de contact.

Ce qui précède montre bien les applications attendues d'un tel contact par exemple sur des véhicules en train ou avec remorques.

Etant disposé du côté remorque, dans une borne support, en cas de nécessité de séparation urgente de la voiture remorquée par exemple, l'attelage étant supposé libéré et les véhicules s'éloignant, la tension de traction à la séparation s'appliquera sur le contact sécable qui s'ouvrira sans dommages à l'effort de traction de sécurité préalablement taré. La séparation ne créera aucune incidence sur les autres éléments de liaison électriques et qui seront parfaitement à même de reprendre leur fonction à une nouvelle fermeture du circuit électrique entre lesdits véhicules.

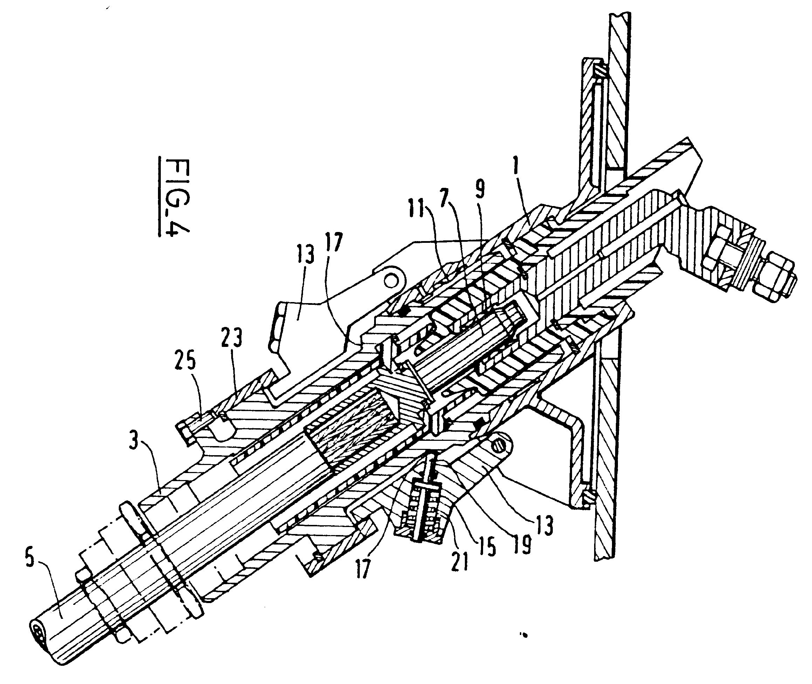

Comme représenté à la figure 4 pour une autre variante de réalisation, le contact électrique sécable est essentiellement constitué d'une partie fixe ou socle 1 fixé sur une paroi support et d'une partie mobile complémentaire ou fiche 3 reliée à un câble électrique souple 5.

La partie de contact électrique interne est de type à broche 7 et alvéole élastique classique 9, l'alvéole étant disposé du côté socle et la et la broche mâle cylindrique du côté fiche. Un contact de masse 11 isolé des éléments précédents est également établi via l'enveloppe métallique de la fiche et du socle.

Le verrouillage mécanique sécable du contact est assuré par un dispositif de retenue externe et par conséquent visible de l'extérieur. Ce dispositif est constitué de l'ensemble de deux bars articulés 13 sur le corps du socle, munis de poussoirs à ressort 15, et d'une portée conique 17 formé sur le corps de la fiche. Les poussoirs sont disposés diamétralement opposés l'un à l'autre et comporte chacun un doigt télescopique 19 rappelé vers le bas par un ressort 21 enfermé à l'intérieur. Les doigts, lorsque les bars sont amenés en position de verrouillage, appliqués contre le corps du socle, sont tournés vers la portée conique maintenant ainsi la fiche mobile dans son socle. Cette portée conique est traitée pour obtenir une dureté voisine de celle de l'acier.

Une bague rotative 23 est montée sur le corps de la fiche à proximité des extrémités des bras articulés du socle. Cette bague est une bride de verrouillage des bras en service normal. Elle comporte des encoches sur son bord permettant le passage et donc le rabattement des bras (de leur extrémité) sous celle-ci à un angle de rotation donné et lorsqu'on la tourne elle verrouille les bras en position par sa surface inférieure. Une vis d'arrêt 25 fixée sur le corps de la fiche verrouille la rotation de la bague et donc assure le verrouillage constant des bras. Le s poussoirs sont tarés (de préférence en usine) pour que la jonction de contact puisse être sectionnée à un effort de traction de 200 à 250 daN, cette dernière valeur étant modulable selon le besoin jusqu'à 1000 daN en plus suivant la résistance du contact.

Le fonctionnement du contact est particulièrement simple.

L'enfichage du contact est réalisé de façon classique à la main sous un effort de poussée de l'ordre de 40 daN, nécessaire à l'engagement de la broche mâle dans l'alvéole de réception et du contact de masse réalisé par les partie d'enveloppe externe métallique. On bascule ensuite les bras pour les amener en position sensiblement parallèle le long du corps du contact en s'assurant que les doigts 19 de poussoir s'appuient sur la portée conique 17 de retenue. On verrouille ensuite les bras en position en tournant la bague rotative puis on serre la vis d'immobilisation de la bague. La jonction mécanique est maintenant prête à fonctionner et à assurer la fonction de sécabilité automatique de sécurité du contact, hors tension et sous un effort de traction réglé à 200-250 daN. Dans ce cas d'extraction, les deux poussoirs sont repoussés et laissent reculer axialement la fiche. Les extrémités des bras se dégagent alors de la bague rotative 23 libérant ainsi la jonction mécanique sécable. La fiche s'extrait alors aisément de son socle.

Après extraction, la fiche sécable n'ayant subi aucune dégradation peut être remise en service très aisément en reprenant le cycle de mise en place précédent du contact.

Ce qui précède montre bien les avantages du contact électrique sécable selon cette dernière version en particulier, quant à l'accessibilité et visibilité des éléments d'engagement de la jonction mécanique sécable.

Il est à noter que le contact de l'invention n'est nullement limité aux exemples décrits, notamment quant à la gamme permise de valeurs de traction au sectionnement, mais qu'elle en embrasse au contraire toutes les variantes entrant dans le cadre des revendications ci-après.

## Revendications

1. Contact électrique comportant une première partie de contact électrique classique et une seconde partie attenante à la partie de contact et formant jonction mécanique réversible du contact électrique, ladite partie de jonction mécanique étant conformée de telle sorte qu'elle n'affecte pas la partie de contact électrique, et la jonction étant réalisable hors tension manuellement et sécable hors tension sous un effort de traction déterminé, caractérisé en ce que la partie mécanique assurant la jonction est constituée de l'ensemble de deux pièces de type respectivement mâle et femelle (11, 13; 23, 27) coopérant l'une avec l'autre en engagement mutuel par déformation élastique, les pièces étant solidaires respectivement de chacune des deux parties de contact (1) et (7).

2. Contact électrique selon la revendication 1, caractérisé en ce que l'élément mâle est un embout (11) en acier indéformable de forme ogivale ou à double développement conique avant et arrière, de diamètre maximal inférieur à celui de l'alvéole (3), l'élément femelle étant une noix extensible ou déformable (13) recevant élastiquement ledit embout (11) à l'extrémité arrière de l'alvéole et ne permettant son extraction en vue de l'ouverture du contact que sous un effort de traction déterminé.

3. Contact électrique selon la revendication 1, caractérisé en ce que les pièces de la jonction mécanique consistent en une bague (23) solidaire de l'une des parties de contact (1) et en une noix complémentaire extensible ou déformable (27), reçue dans ladite bague et de diamètre inférieur à celui de l'alvéole (3), disposée en bout de l'autre partie de contact (7) solidairement à cette dernière, la noix (27) étant apte à être engagée dans la bague (23) à l'arrière de la partie de contact (1), avec pose d'un élément d'assemblage (31) après branchement manuel de la seconde partie de contact sur la première partie, et séparée par extraction élastique de la bague (23) à la déconnexion sous une valeur de traction à tarage déterminé.

4. Contact électrique selon l'une des revendications 2-3, caractérisé en ce que l'élément noix (13, 27) est fendu longitudinalement.

5. Contact électrique selon la revendication 3, caractérisé en ce que la bague (23) comporte une ouverture conique formant zone d'appui pour la portée conique (29) de la noix.

6. Contact électrique selon la revendication 2, caractérisé en ce que la noix extensible (13) comporte des protubérances radiales internes (21) coopérant avec la partie arrière (19) de l'embout (11) à la jonction.

7. Contact électrique comportant une première partie de contact électrique classique et une seconde partie attenante à la partie de contact et formant jonction mécanique réversible du contact électrique, ladite partie de jonction mécanique étant conformée de telle sorte qu'elle n'affecte pas la partie de contact électrique, et la jonction étant réalisable hors tension manuellement et sécable hors tension sous un effort de traction déterminé, caractérisé en ce que la partie de jonction mécanique consiste en au moins deux bras articulés (13), solidaires de la première partie du contact (1) et disposés sur sa périphérie, par exemple, diamétralement opposés l'un à l'autre, ces bras étant munis de poussoirs à ressort (15) aptes à s'engager élastiquement à la fermeture du contact sur un profil de retenue (17) formé sur le corps de la seconde partie (3) de contact lorsque ses bras sont verrouillés en service, rabattus en position le long du corps de la partie (1) de contact, les poussoirs (15) étant tarés à une force déterminée pour permettre le dégagement de sécurité de ladite partie (3) du contact sous un effort d'extraction donné.

8. Contact électrique sécable selon la revendication 7, caractérisé en ce que ledit profil de retenue (17) est de forme conique et les poussoirs (15) sont à doigt télescopique (19) tourné vers ledit profil.

9. Contact électrique sécable selon l'une des revendications 7 et 8, caractérisé en ce que le verrouillage des bras articulés est réalisé par une bague (23) montée rotative sur la partie de contact mobile ou fiche (3), cette bague étant munie d'encoches laissant passer la partie d'extrémité des bras (13) lors de leur mise en position de verrouillage et les maintenant en position verrouillée par leur extrémité sous sa surface inférieure après rotation.

10. Contact électrique selon la revendication 9, caractérisé en ce que la bague (23) est verrouillée en rotation par une vis (25) fixée sur le corps de la fiche.

11. Contact électrique selon l'un des revendications précédentes, caractérisé en ce que la partie mécanique de jonction (11, 13, 23, 27) est tarée à une force de traction compatible à la section, la nature des câbles d'entrée-sortie (9) et tenant compte des critères d'exploitation pour assurer un maintien correct du contact électrique résistant aux phases normales d'exploitation, et également aux conditions d'exploitation.

12. Contact électrique selon l'une des revendications précédentes, caractérisé en ce que le sectionnement est effectué hors tension ou hors charge.

## Patentansprüche

1. Elektrischer Kontakt mit einem ersten herkömmlichen Stromkontaktteil und einem zweiten, an das Kontaktteil anschließenden Abschnitt, der eine umschaltbare mechanische Verbindung des elektrischen Kontakts bildet, wobei der mechanische Kontakabschnitt so ausgebildet ist, daß er keinen Einfluß auf das elektrische Kontaktteil nimmt, und wobei die Verbindung spannungslos von Hand herstellbar und unter Einwirkung einer vorgegebenen Zugkraft spannungslos trennbar ist, **dadurch gekennzeichnet**, daß der mechanische Abschnitt, der die Verbindung gewährleistet, aus dem Verbund von zwei Teilen, und zwar jeweils einem Matrizen- und einem Patrizenteil (11, 13; 23, 27), besteht, die jeweils in gegenseitigem Eingriff unter elastischer Verformung miteinander zusammenwirken, wobei die Teile jeweils fest mit jedem der beiden Kontaktbereiche (1) und (7) verbunden sind.

2. Elektrischer Kontakt nach Anspruch 1, **dadurch gekennzeichnet**, daß das Patrizenteil ein nicht verformbares Steckerteil (11) aus Stahl in Form eines Spitzbogens bzw. mit doppelter konischer Abwicklung vorne und hinten ist, dessen größtmöglicher Durchmesser kleiner ist als der der Steckerhülse (3), während das Matrizenteil eine ausziehbare oder verformbare Muffe (13) ist, welche das Steckerteil (11) am hinteren Ende der Steckerhülse aufnimmt und dessen Herausziehen zum Öffnen des Kontakts nur unter Einwirkung einer vorgegebenen Zugkraft gestattet.

3. Elektrischer Kontakt nach Anspruch 1, **dadurch gekennzeichnet**, daß die Teile zur mechanischen Verbindung aus einem fest mit einem der Kontaktteile (1) verbundenen Ring (23) und einer komplementären ausziehbaren oder verformbaren Muffe (27) bestehen, die in den Ring eingesetzt wird und deren Durchmesser kleiner als der der Steckerhülse (3) ist und die am Ende des anderen Kontaktteils (7) in fester Verbindung mit letzterem angeordnet ist, wobei die Muffe (27) in den Ring (23) hinter dem Kontaktteil (1) unter Einsetzen eines Verbindungselements (31) nach manuellem Anschließen des zweiten Kontaktabschnitts auf dem ersten Kontaktteil einsetzbar und durch elastisches Herausziehen aus dem Ring (23) zum Lösen der Verbindung unter Zugwirkung bei vorgegebenem Einstellwert trennbar ist.

4. Elektrischer Kontakt nach einem der Ansprüche 2 bis 3, **dadurch gekennzeichnet**, daß das Muffenteil (13, 27) in Längsrichtung geschlitzt ist.

5. Elektrischer Kontakt nach Anspruch 3, **dadurch gekennzeichnet**, daß der Ring (23) eine konische Öffnung aufweist, die einen Abstützbereich für den konischen Abschnitt (29) der Muffe bildet.

6. Elektrischer Kontakt nach Anspruch 2, **dadurch gekennzeichnet**, daß die ausziehbare Muffe (13) radiale Innenvorsprünge (21) aufweist, die mit dem rückwärtigen Abschnitt (19) des Steckerteils (11) zur Verbindung zusammenwirken.

7. Elektrischer Kontakt mit einem ersten herkömmlichen Stromkontaktteil und einem zweiten, an das Kontaktteil anschließenden Abschnitt, der eine umschaltbare mechanische Verbindung des elektrischen Kontakts bildet, wobei der mechanische Kontaktabschnitt so ausgebildet ist, daß er keinen Einfluß auf das elektrische Kontaktteil nimmt, und wobei die Verbindung spannungslos von Hand herstellbar und unter Einwirkung einer vorgegebenen Zugkraft spannungslos trennbar ist, **dadurch gekennzeichnet**, daß der Abschnitt zur mechanischen Verbindung aus mindestens zwei fest mit dem ersten Kontaktteil (1) verbundenen angelenkten Armen (13) besteht, die auf seinem Umfang, beispielsweise diametral einander gegenüber, angeordnet sind, wobei diese Arme mit gefederten Druckvorrichtungen (15) versehen sind, welche beim Schließen des Kontakt elastisch mit einem Halteprofil (17) in Eingriff bringbar sind, welches auf dem Hauptteil des zweiten Kontaktabschnitts (3) ausgebildet ist, wenn diese Arme in Betriebsstellung verriegelt und in ihre Position entlang des Hauptteils des Kontaktteils (1) umgeschlagen sind, wobei die Druckvorrichtungen (15) auf eine vorgegebene Kraft geeicht sind, um die gesicherte Freigabe des Kontaktabschnitts unter Einwirkung einer vorgegebenen Zugkraft zu gestatten.

8. Lösbarer elektrischer Kontakt nach Anspruch 7, **dadurch gekennzeichnet**, daß as Halteprofil (17) konisch geformt ist und daß die Druckvorrichtungen (15) einen dem Profil zugekehrten Teleskopfinger (19) aufweisen.

9. Lösbarer elektrischer Kontakt nach einem der Ansprüche 7 und 8, **dadurch gekennzeichnet**, daß die Verriegelung der angelenkten Arme mittels eines Rings (23) ausgeführt ist, der drehbar auf dem beweglichen Kontaktteil bzw. Steckerteil (3) angeordnet ist, wobei dieser Ring Vertiefungen aufweist, welche den Endabschnitt der Arme (13) hindurchtreten lassen, wenn diese in Verriegelungsstellung gebracht werden, und welche sie nach Drehung unter der Innenfläche mit ihrem Ende in verriegelter Stellung halten.

10. Elektrischer Kontakt nach Anspruch 9, **dadurch gekennzeichnet**, daß der Ring (23) mittels einer auf dem Hauptteil des Stekkers befestigten Schraube (25) in seiner Drehlage verriegelt ist.

11. Elektrischer Kontakt nach einem der vorhergehenden Ansprüche, **dadurch gekennzeichnet**, daß der Abschnitt zur mechanischen Verbindung (11, 13, 23, 27) auf eine Zugkraft geeicht ist, die mit dem Querschnitt, der Art der zugeführten und wegführenden Kabel (9) und mit Berücksichtigung der Einsatzkriterien vereinbar ist, um eine entsprechende Aufrechterhaltung des elektrischen Kontakts zu gewährleisten, wobei eine entsprechende Widerstandsfähigkeit gegenüber den üblichen Betriebsphasen und auch den Einsatzbedingungen gegeben ist.

12. Elektrischer Kontakt nach einem der vorhergehenden Ansprüche, **dadurch gekennzeichnet**, daß die Trennung im spannungslosen bzw. lastlosen Zustand vorgenommen wird.

## Claims

1. An electrical contact comprising a first conventional electrical contact part and a second part adjoining the contact part and forming a reversible mechanical junction of the electrical contact, said mechanical junction part being designed in such a way that it does not affect the electrical contact part, and the junction being able to be made manually when the power is off and being able to be broken when the power is off in the presence of a given tractive force, characterised in that the mechanical part forming the junction is constituted by the assembly of two respective male and female pieces (11, 13; 23, 27) which cooperate with each other by mutual engagement by elastic deformation, the pieces being integral with each of the two parts of the contact (1) and (7) respectively.

2. An electrical contact according to Claim 1, characterised in that the male element is a tip (11) of non-deformable steel and ogival in shape or with a double conical configuration at the front and back and having a maximum diameter which is less than that of the socket (3), the female element being an extendable or deformable nut (13) which elastically receives said tip (11) at the rear end of the socket and which only allows it to be taken out to open the contact in the presence of a given tractive force.

3. An electrical contact according to Claim 1, characterised in that the mechanical junction pieces consist of a ring (23) which is integral with one of the contact parts (1) and of a complementary extendable or deformable nut (27) which is received in said ring and the diameter of which nut is less than that of the socket (3), the nut being placed at the end of the other contact part (7) integral with this latter, the nut (27) being capable of being engaged in the ring (23) into the rear of the contact part (1), with an assembly element (31) being placed in position after the second contact part has been plugged manually onto the first part, and the nut being separated by elastic removal of the ring (23) for disconnection in the presence of a traction value for a given calibration.

4. An electrical contact according to one of Claims 2-3, characterised in that the nut element (13, 27) is slit longitudinally.

5. An electrical contact according to Claim 3, characterised in that the ring (23) comprises a conical opening which forms a support zone for the conical bearing surface (29) of the nut.

6. An electrical contact according to Claim 2, characterised in that the extendable nut (13) comprises internal radial protuberances (21) which cooperate with the rear part (19) of the tip (11) at the junction.

7. An electrical contact comprising a first conventional electrical contact part and a second part adjoining the contact part and forming a reversible mechanical junction of the electrical contact, said mechanical junction part being designed in such a way that it does not affect the electrical contact part, and the junction being able to be made manually when the power is off and able to be broken when the power is off in the presence of a given tractive force, characterised in that the mechanical junction part consists of at least two hinged arms (13) which are integral with the first contact part (1) and which are arranged on its periphery, diametrally opposite each other, for example, these arms being provided with sprung pushing devices (15) which are capable of engaging elastically, when the contact closes, over a retaining profile member (17) formed on the body of the second contact part (3) when its arms are locked during use, folded down in position along the body of the contact part (1), the pushing devices (15) being calibrated for a given force to enable said contact part (3) to be released for safety reasons in the presence of a given removal force.

8. A breakable electrical contact according to Claim 7, characterised in that said retaining profile member (17) is conical in shape and the pushing devices (15) have a telescopic finger (19) facing said profile member.

9. A breakable electrical contact according to one of Claims 7 and 8, characterised in that the hinged arms are locked by way of a ring (23) rotatably mounted to the movable contact part or plug (3), this ring being provided with slots which allow the end parts of the arms (13) to pass through it when in their locking position, and keeping them in their locked position by their ends under its bottom surface after rotation.

10. An electrical contact according to Claim 9, characterised in that the ring (23) is rotatably locked by a screw (25) fixed to the body of the socket.

11. An electrical contact according to one of the preceding claims, characterised in that the mechanical junction part (11, 13, 23, 27) is calibrated for a tractive force which is compatible with the section, the type of input-output cables (9) and in consideration of the operating criteria whereby the electrical contact will be held correctly and will resist normal operating phases and also conditions of operation.

12. An electrical contact according to one of the preceding claims, characterised in that disconnection is carried out when the power is off and when there is no load.
